Europäisches Patentamt

(19) **European Patent Office**

**Office européen des brevets**

(11) Veröffentlichungsnummer: **0 044 386**
**B1**

(12) **EUROPÄISCHE PATENTSCHRIFT**

(45) Veröffentlichungstag der Patentschrift:
16.05.84

(51) Int. Cl.³: **B 23 B 51/00**, B 23 B 51/16,
B 23 Q 11/00

(21) Anmeldenummer: **81103863.7**

(22) Anmeldetag: **20.05.81**

(54) **Bohrvorrichtung zur Herstellung von Bohrlöchern mit Hinterschneidung.**

(30) Priorität: **19.07.80 DE 3027408**

(43) Veröffentlichungstag der Anmeldung:
**27.01.82 Patentblatt 82/4**

(45) Bekanntmachung des Hinweises auf die Patenterteilung:
**16.05.84 Patentblatt 84/20**

(84) Benannte Vertragsstaaten:
**AT BE CH FR GB IT LI NL SE**

(56) Entgegenhaltungen:
**CH - A - 598 900**
**DE - A - 2 549 057**
**DE - A - 2 705 409**
**DE - A - 2 746 029**
**DE - B - 2 539 521**
**DE - B - 2 547 412**
**DE - C - 972 999**
**GB - A - 425 736**

(73) Patentinhaber: **artur fischer forschung,**
**Weinhalde 14 - 18, D-7244 Waldachtal 3 (Tumlingen) (DE)**

(72) Erfinder: **Fischer, Artur, Dr. h. c., Weinhalde 34,**
**D-7244 Waldachtal 3 Tumlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Bohrvorrichtung zur Herstellung von Bohrlöchern mit Hinterschneidung

Die Erfindung betrifft eine zur Herstellung von Bohrlöchern mit Hinterschneidung bestimmte Bohrvorrichtung, bestehend aus einem Bohrer mit einem radial den Bohrschaft überragenden Seitenschneiden aufweisenden Bohrplättchen, einem im Bereich des Bohrschaftes sitzenden Anschlagteil mit zur Bohrerspitze hin halbkugelförmig gerundeter Stirnseite, die sich in einer Mulde einer über den Bohrschaft gestülpten Anschlagplatte zur Bildung eines Schwenklagers abstützt, und einer mit der Anschlagplatte verbindbaren Bohrglocke, deren zentrische Durchgangsbohrung einen Durchmesser aufweist, der einen auf den gewünschten Ausformgrad der Hinterschneidung abgestimmten Schwenkwinkel begrenzt.

Eine solche aus der DE-A-27 46 029 bekannte Bohrvorrichtung ermöglicht in einfacher Weise das Herstellen von Bohrungen mit einer Hinterschneidung in der Bohrlochtiefe durch Schwenken des Bohrers, wenn die gewünschte Bohrlochtiefe erreicht ist. Die Anschlagplatte nimmt dabei den beim Bohr- und Schwenkvorgang entstehenden Anpreßdruck auf. Zur Herstellung von Bohrlöchern mit unterschiedlicher Bohrlochtiefe ist es bekannt, eine den Anschlagbund tragende und über den Bohrschaft gestülpte Hülse auf diesem zu verschieben und beispielsweise durch einen die Wandung der Hülse durchdringenden Stift, Stiftschraube oder dgl. auf dem Bohrschaft in der gewünschten Stellung festzusetzen. Eine derartige Festsetzung der Hülse ist nur für eine Verwendung in weichen Baustoffen geeignet, da in diesen Baustoffen zur Herstellung der Bohrung keine Schlagwirkung der Bohrmaschine benötigt wird. Bei der Herstellung von Bohrlöchern mit Hinterschneidungen in Beton sind jedoch Schlagbohrmaschinen bzw. Bohrhämmer erforderlich. Bei einer Festsetzung der Hülse am Bohrschaft mit Stift, Stiftschraube oder ähnlichen Arretierungen würde durch die Schlagwirkung eine Verstellung des Anschlages durch Lösen bzw. Abscheren eintreten.

Bei einer bekannten Ausführung ist auch vorgesehen, daß der Bohrschaft direkt in das Bohrfutter der Bohrmaschine eingespannt wird. Der relativ lange Bohrschaft, der bei einer Verwendung in Bohrhämmern zusätzlich dem Bohrfutter des Bohrhammers angepaßte Gestaltungselemente aufweisen muß, sowie die Vorkehrungen für die Festsetzung der Hülse ergeben relativ hohe Bohrerkosten. Da der Bohrer als Verschleißteil häufig ausgewechselt werden muß, sind die Kosten für die Herstellung des Bohrloches mit der bekannten Bohrvorrichtung sehr hoch.

Der Erfindung liegt die Aufgabe zugrunde, eine Bohrvorrichtung zu schaffen, bei der insbesondere in harten Baustoffen unter Verwendung von Bohrhämmern bzw. Schlagbohrmaschinen Bohrlöcher mit Hinterschneidung funktionssicher und kostengünstig hergestellt werden können.

Erfindungsgemäß wird dies dadurch erreicht, daß das Anschlagteil in die Aufnahme des Bohrhammers bzw. der Schlagbohrmaschine einspannbar ist, und daß das Anschlagteil mit einem zentrischen Innengewinde versehen ist, in das der ein Außengewinde aufweisende Bohrer einschraubbar ist.

Durch diese Gestaltung ergibt sich ein günstiger Kraftfluß von der Schlagbohrmaschine auf die Bohrerspitze. Ferner ist eine Verschiebung des Anschlages und damit eine Verstellung der eingestellten Bohrlochtiefe nicht mehr möglich. Nach wie vor sind jedoch unterschiedliche Bohrlochtiefen durch verschiedene Längen des in das Anschlagteil einzuschraubenden Bohrers einstellbar. Schließlich ist eine kostengünstige Herstellung des Bohrloches möglich, da als Verschleißteil nunmehr der kurze Bohrer ausgewechselt werden muß und über die Schraubverbindung des Bohrers mit dem Anschlagteil diese Auswechslung auch ohne weiteres möglich ist.

In einer weiteren Ausgestaltung der Erfindung kann das Gewinde zum Einschrauben des Bohrschaftes in das Anschlagteil als Rundgewinde ausgebildet sein. Das Rundgewinde eignet sich besonders für die Verbindung zwischen Bohrerschaft und Anschlagteil, da nahezu keine Kerbwirkung auftritt und die Schlagwirkung nur in Achsrichtung weitergeleitet wird.

In einer weiteren Ergänzung der Erfindung kann der Rand der Mulde über die halbkugelförmig gerundete Stirnseite des Anschlagteiles überstehen. Der hochgezogene Rand der Mulde verhindert ein Abrutschen des Anschlagteiles und sorgt somit für dessen zentrische Führung bei der Schwenk- und Rührbewegung.

In einer weiteren Ausgestaltung der Erfindung kann die halbkugelförmig gerundete Stirnseite des Anschlagteiles mit in Achsrichtung verlaufenden Aussparungen versehen sein. Durch diese Aussparungen kann das von den Bohrmehlnuten des Bohrers aus dem Bohrloch geförderte Bohrmehl abfließen.

In einer weiteren Ergänzung der Erfindung kann die Anschlagplatte mit einem in das Bohrloch eingreifenden hülsenförmigen Zentrieransatz versehen sein, dessen Innendurchmesser größer ist als der Schaftdurchmesser des Bohrers. Durch den Ansatz wird die Bohrvorrichtung zentriert, so daß eine gleichmäßige Ausschabung der Hinterschneidung erreicht wird.

Schließlich kann der die Mulde tragende Teil der Anschlagplatte aus Metall bestehen, der in einer Kunststoffscheibe eingebettet ist. Durch die rotierende Bewegung des Anschlagbundes in der Mulde entsteht eine sehr hohe Reibung, wobei durch die Ausbildung der Mulde aus Metall kein übermäßiger Verschleiß entsteht. Aus Kostengründen ist der weniger beanspruchte Teil der Anschlagplatte aus Kunststoff hergestellt. Eine einfache Herstellungsmöglichkeit der Anschlagplatte besteht darin, den Metallteil in der Spritzform zu umspritzen.

In einer weiteren Ergänzung der Erfindung kann die Bohrglocke mit einem als Handgriff ausgebildeten Rohrstutzen versehen sein. An den Rohrstutzen ist ein Schlauch anschließbar, der mit einem Bohrmehlabsauggerät versehen ist. Durch die Ausbildung des Rohrstutzens als Handgriff ist eine günstige Handhabung bei der Herstellung des Bohrloches gewährleistet.

Schließlich kann an der Durchgangsbohrung der Bohrglocke ein nach innen gerichteter hülsenförmiger Ansatz angeordnet sein. Da die Durchgangsbohrung zur Ermöglichung der Schwenkbewegung größer ist als der Schaft des Anschlagteiles an dieser Stelle, könnte bei Bohrungen in Decken aus diesem Spalt trotz Absaugung Bohrmehl austreten. Durch den nach innen gerichteten hülsenförmigen Ansatz wird dies weitgehendst vermieden.

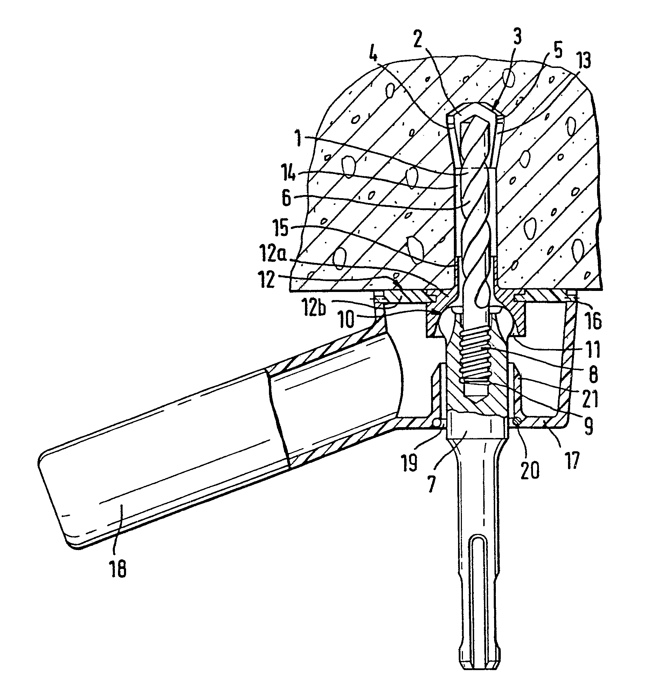

In der Zeichnung ist ein Ausführungsbeispiel der Erfindung dargestellt.

Der Bohrer besteht aus dem Bohrschaft 1 und dem mit diesem verbundenen Bohrplättchen 2. Dieses weist außer der Stirnschneide 3 noch radial über den Bohrschaft hinausragende Seitenschneiden 4, 5 auf. Zur Bohrmehlabfuhr ist der Bohrschaft 1 mit den Schaft schraubenlinienförmig umwindenden Nuten 6 versehen. Zur Verbindung des Bohrers mit dem Anschlagteil 7 weist dieser ein Außen-Rundgewinde 8 auf, das in ein entsprechendes Innengewinde 9 des Anschlagteiles 7 paßt. Die Länge des Bohrers bestimmt die Bohrlochtiefe, da die halbkugelförmig gerundete Stirnseite 10 des Anschlagteiles 7 als Anschlag dient. Die Stirnseite 10 stützt sich in einer Mulde 11 der auf der Oberfläche des Mauerwerks aufliegenden Anschlagplatte 12 ab. Dadurch ergibt sich ein Schwenklager, das es ermöglicht, den Bohrer während des Bohrvorganges auszuschwenken und durch Rühren die Hinterschneidung 13 des Bohrloches 14 auszubilden. Der die Mulde 11 tragende Teil 12a der Anschlagplatte 12 besteht aus Metall, der in einer Kunststoffscheibe 12b eingebettet ist. Zur Zentrierung und Halterung der Anschlagplatte 12 weist diese einen hülsenförmigen, in das Bohrloch 14 eingreifenden Zentrieransatz 15 auf.

Zum Auffangen des Bohrmehls und zur besseren Handhabung ist die Anschlagplatte 12 über einen Bajonettverschluß 16, Stiftverbindung, Schraubverbindung oder dgl. mit einer Bohrglocke 17 verbunden, die mit einem seitlich abstehenden, als Handgriff ausgebildeten Rohrstutzen 18 versehen ist. An diesen Rohrstutzen 18 ist der Schlauch einer Absaugvorrichtung anschließbar. Der Durchmesser der Durchgangsbohrung 19 in der Bohrglocke 17 ist so gewählt, daß durch die Begrenzung der Schwenkbewegung der Bohrvorrichtung der gewünschte Ausformgrad der Hinterschneidung 13 erreicht wird. Zur Verbesserung der Reibverhältnisse ist in die Bohrglocke 17 im Bereich der Durchgangsbohrung 19 ein Metallring 20 eingebettet, an dem das Anschlagteil 7 anschlagen kann. Um das Ausfließen des Bohrmehls aus dem Spalt zwischen der Durchgangsbohrung 19 und dem Anschlagteil 7 zu verhindern, ist ein nach innen gerichteter hülsenförmiger Ansatz 21 an der Bohrglocke 17 angeordnet.

**Patentansprüche**

1. Bohrvorrichtung zur Herstellung von Bohrlöchern (14) mit Hinterschneidung (13), bestehend aus einem Bohrer mit einem radial den Bohrschaft (1) überragenden Seitenschneiden (4, 5) aufweisenden Bohrplättchen (2), einem im Bereich des Bohrschaftes sitzenden Anschlagteil (7) mit zur Bohrerspitze hin halbkugelförmig gerundeter Stirnseite (10), die sich in einer Mulde (11) einer über den Bohrschaft (1) gestülpten Anschlagplatte (12) zur Bildung eines Schwenklagers abstützt, und einer mit der Anschlagplatte verbindbaren Bohrglocke (17), deren zentrische Durchgangsbohrung (19) einen Durchmesser aufweist, der einen auf den gewünschten Ausformgrad der Hinterschneidung (18) abgestimmten Schwenkwinkel begrenzt, dadurch gekennzeichnet, daß das Anschlagteil (7) in die Aufnahme des Bohrhammers bzw. der Schlagbohrmaschine einspannbar ist, und daß das Anschlagteil (7) mit einem zentrischen Innengewinde (9) versehen ist, in das der ein Außengewinde (8) aufweisende Bohrer einschraubbar ist.

2. Bohrvorrichtung nach Anspruch 1, dadurch gekennzeichnet, daß das Außengewinde (8) zum Einschrauben des Bohrschaftes in das Anschlagteil (7) als Rundgewinde ausgebildet ist.

3. Bohrvorrichtung nach Anspruch 1, dadurch gekennzeichnet, daß der Rand der Mulde (11) über die halbkugelförmig gerundete Stirnseite (10) des Anschlagteiles (7) übersteht.

4. Bohrvorrichtung nach Anspruch 1, dadurch gekennzeichnet, daß die halbkugelförmig gerundete Stirnseite (10) des Anschlagteiles (7) mit in Achsrichtung verlaufenden Aussparungen versehen ist.

5. Bohrvorrichtung nach Anspruch 1, dadurch gekennzeichnet, daß die Anschlagplatte (12) mit einem in das Bohrloch eingreifenden hülsenförmigen Zentrieransatz (15) versehen ist, dessen Innendurchmesser größer ist als der Schaftdurchmesser des Bohrers.

6. Bohrvorrichtung nach Anspruch 1, dadurch gekennzeichnet, daß der die Mulde (11) tragende Teil (12a) der Anschlagplatte (12) aus Metall besteht, der in einer Kunststoffscheibe (12b) eingebettet ist.

7. Bohrvorrichtung nach Anspruch 1, dadurch gekennzeichnet, daß die Bohrglocke (17) mit einem als Handgriff ausgebildeten Rohrstutzen (18) versehen ist.

8. Bohrvorrichtung nach Anspruch 1, dadurch gekennzeichnet, daß an der Durchgangsbohrung (19) der Bohrglocke (17) ein nach innen gerichteter hülsenförmiger Ansatz (21) angeordnet ist.

## Claims

1. Drilling device for producing drilled holes (14) having an undercut (13) comprising a drill having a laminar drill bit (2) with lateral cutting edges (4, 5) projecting radially beyond the drill shaft (1), a stop piece (7) which is located in the region of the drill shaft and which has an end face (10) that is semispherically rounded in a direction towards the tip of the drill and that is supported, to form a swivel bearing, in a depression (11) in a stop plate (12) mounted over the drill shaft (1), and a drill-bell (17) connectible to the stop plate, a central through bore-hole (19) of which has a diameter for so limiting the swivel angle that it is matched to the desired degree of widening of the undercut (18), characterized in that the stop piece (7) can be clamped into the chuck of a drill hammer or percussion drilling machine and the stop piece (7) is provided with a central internal thread (9) into which an external thread (8) of the drill can be screwed.

2. Drilling device according to claim 1, characterized in that the external thread (8) for screwing the drill shaft into the stop piece (7) is formed as a rounded thread.

3. Drilling device according to claim 1, characterized in that the lip of the depression (11) projects beyond the semi-spherically rounded end face (10) of the stop piece (7).

4. Drilling device according to claim 1, characterized in that the semi-spherically rounded end face (10) of the stop piece (7) is provided with axially extending openings.

5. Drilling device according to claim 1, characterized in that the stop plate (12) is provided with a sleeve-shaped centering stop (15) for engaging the mouth of the drilled hole, the internal diameter of which stop is larger than is the diameter of the shaft of the drill.

6. Drilling device according to claim 1, characterized in that that portion (12a) of the stop plate (12) forming the depression (11) consists of metal and is bedded in a plastics washer (12b).

7. Drilling device according to claim 1, characterized in that the drill-bell (17) is provided with a connecting sleeve (18) forming a hand grip.

8. Drilling device according to claim 1, characterized in that there is arranged at the through bore-hole (19) of the drill-bell (17) an internally projecting sleeve (21).

## Revendications

1. Dispositif de perçage destiné à exécuter des trous borgnes (14) à dépouille (13), consistant en un fleuret qui porte une plaquette (2) de coupe à arêtes de coupe latérales (4, 5) faisant saillie radialement de la tige (1) du fleuret, en un organe (7) de butée disposé contre cette tige et comportant un côté frontal hémisphérique creux tourné vers la pointe du fleuret, qui s'appuie sur une cuvette (11) d'une plaque (12) de butée, retournée sur la tige (1) du fleuret de façon à former une portée oscillante, et en une cloche (17) qui peut être fixée à cette plaque de butée et dont le trou central (19) débouchant présente un diamètre qui limite un angle de pivotement correspondant à l'importance désirée de l'agrandissement de la dépouille (13), dispositif caractérisé en ce que l'organe (7) de butée peut être bloqué dans le mandrin du marteau-piqueur ou de la perceuse à percussion et en ce que cet organe (7) présente un taraudage axial (9) dans lequel le fleuret, qui comporte un filetage extérieur (8), peut être vissé.

2. Dispositif de perçage selon la revendication 1, caractérisé en ce que le filetage (8) destiné à visser la queue du fleuret dans l'organe (7) de butée est un filetage à filets ronds.

3. Dispositif de perçage selon la revendication 1, caractérisé en ce que le bord de la cuvette (11) dépasse le côté frontal hémisphérique (10) de l'organe (7) de butée.

4. Dispositif de perçage selon la revendication 1, caractérisé en ce que le côté frontal hémisphérique (10) de l'organe (7) de butée comporte des encoches orientées dans le sens de l'axe.

5. Dispositif de perçage selon la revendication 1, caractérisé en ce que la plaque (12) de butée comporte un prolongement (15) de centrage, en forme de collet, qui pénètre dans le trou (14) et dont le diamètre intérieur est plus grand que le diamètre de la tige du fleuret.

6. Dispositif de perçage selon la revendication 1, caractérisé en ce que la partie (12a) de la plaque (12) de butée portant la cuvette (11) est une pièce métallique, qui est encastrée dans un disque (12b) en matière plastique.

7. Dispositif de perçage selon la revendication 1, caractérisé en ce que la cloche (17) comporte un raccord tubulaire (18) ayant la conformation d'une poignée.

8. Dispositif de perçage selon la revendication 1, caractérisé en ce qu'un prolongement (21) en forme de collet, orienté vers l'intérieur, est disposé sur le trou (19) de passage de la cloche (17).